# EUROPÄISCHE PATENTSCHRIFT

(11) **EP 0 975 238 B1**
(45) Veröffentlichungstag und Bekanntmachung des Hinweises auf die Patenterteilung: **02.05.2003**
(21) Anmeldenummer: 99907515.3
(22) Anmeldetag: 06.02.1999
(51) Int. Cl.: A23P 1/14, A23L 1/18

(54) **VORRICHTUNG UND VERFAHREN ZUM PUFFEN VON KÖRNIGEM GUT**
METHOD AND DEVICE FOR PUFFING GRAINS
DISPOSITIF ET PROCEDE POUR LE GONFLEMENT DE MATIERES EN GRAINS

(30) Priorität: 19.02.1998 DE 19806951
(43) Veröffentlichungstag der Anmeldung: 02.02.2000
(73) Patentinhaber: Bichsel, Rudolf, 3400 Burgdorf (CH)
(72) Erfinder: Bichsel, Rudolf, 3400 Burgdorf (CH)
(74) Vertreter: Weller, Wolfgang, Dr.
(86) Internationale Anmeldenummer: EP9900797
(87) Internationale Veröffentlichungsnummer: WO99042005

(56) Entgegenhaltungen:
- DE-C- 19 521 243
- US-A- 2 698 799
- US-A- 3 128 690
- US-A- 3 661 071

## Beschreibung

Die Erfindung betrifft eine Vorrichtung zum Puffen von körnigem Gut, insbesondere von Getreide und Hülsenfrüchten, mit einer Heizvorrichtung zum Vorwärmen des körnigen Gutes und mit einem Puffing-Reaktor zum Puffen des Gutes.

Die Erfindung betrifft ferner ein Verfahren zum Puffen von körnigem Gut, insbesondere von Getreide und Hülsenfrüchten, bei dem das Gut zunächst in einer Heizvorrichtung erwärmt wird, und das erwärmte Gut anschließend dem Puffing-Reaktor zugeführt wird.

Eine derartige Vorrichtung und ein solches Verfahren sind in der DE 195 21 243 C1 beschrieben.

Unter Puffen versteht man ein Behandlungsverfahren für ein körniges Gut, insbesondere Getreide und Hülsenfrüchte, das unter Überdruck gedämpft und nach schlagartigem Aufheben des Druckes zu lockeren Massen aufgebläht wird. Die Produkte kommen z.B. als Puff-Weizen, Puff-Reis, Puff-Mais, gepuffte Erbsen usw. in den Handel. Es ist auch möglich, anderes körniges Gut, wie beispielsweise Tabak, so zu behandeln.

In den dreißiger Jahren dieses Jahrhunderts waren die Anlagen so ausgebildet, daß das zu behandelnde Gut in einen liegenden rotierenden Zylinder eingebracht wird. Zunächst wird das Gut im rotierenden Zylinder durch Gasflammen erwärmt, anschließend wird Dampf in den Zylinder eingelassen, bis der Dampfdruck auf einen bestimmten Wert angestiegen ist. Anschließend wird wieder das Erwärmen durch die Gasflammen fortgesetzt, bis im Inneren des Zylinders ein Druck von etwa 12 bar vorherrscht. Anschließend erfolgt ein schlagartiges Öffnen des Zylinders, wobei das Gut herausschießt und aufbläht.

Da dieser Vorgang, der mehrere Minuten dauert, relativ zeitaufwendig ist, wurde in einer Weiterentwicklung dieser Technologie der Vorwärmvorgang und der eigentliche Puffing-Vorgang getrennt durchgeführt, so daß diese Vorgänge parallel stattfinden können.

Bei dem eingangs genannten Dokument wird das zu behandelnde Gut zunächst in einer Heizkammer erwärmt und dort auf eine Vorwärmtemperatur von ca. 100°C vorgewärmt. Von der Heizkammer wird das Gut in einen Zwischenspeicher überbracht, dort ruht das Gut, bis es in den Puffing-Reaktor überführt wird.

Eine ähnliche Vorrichtung ist aus der GB-B-2 186 180 bekannt. Die Heizkammer ist dabei als sich drehende Kammer ausgebildet, die von außen mit Gasflammen beheizt wird. Durch die drehende Heizkammer wird das zu erwärmende Gut kontinuierlich hindurchgeführt, fällt aus dieser in einen trichterförmigen Zwischenbehälter ab, aus dem es über einen Schneckenförderer an das oberer Einfüllende des Puffing-Reaktors geführt wird, wobei es dort nochmals in einen Trichter zwischenüberführt wird.

Eine weitere Konstruktion ist aus der EP-B-0 061 229 bekannt, bei der das Gut mehrere siebbodenartige Vorwärmkammern durchläuft, anschließend in Trichter überführt wird, aus denen dann das vorgewärmte Gut in den eigentlichen Puffing-Reaktor überführt wird.

Aus der CH 656 779 A5 ist eine Vorrichtung zur Konditionierung von Sojabohnenbruch bekannt. In einem Fließbettapparat wird der Sojabohnenbruch mit Luft verwirbelt, die über einen mit zahlreichen Düsen bestückten Verteilboden eingeführt wird. Im Reaktionsraum sind beheizbare Wärmetauscher angeordnet. Die Fließbettapparatur arbeitet kontinuierlich, d.h. es wird laufend Sojabohnenbruch zugeführt und abgeführt. Die Verweilzeit liegt im Bereich von 4 bis 8 Minuten.

Die Anordnung von Wärmetauschern im Reaktionsraum stört die Verwirbelung und ist hygienisch bedenklich. Die konstruktive Ausgestaltung des Verteilerbodens ist aufwendig, und die lange Verweilzeit sowie der kontinuierliche Betrieb sind nicht geeignet, mit einem mit kurzen Taktzeiten von 30 bis 90 Sekunden arbeitenden Puffing-Reaktor kombiniert zu werden.

Bei der eingangs genannten DE 195 21 243 C1 ist der Puffing-Reaktor so ausgebildet, daß eine rasche und gleichmäßige Wärmeverteilung bzw. -übertragung auf das im Puffing-Reaktor aufgenommene Gut erfolgt, so daß sehr kurze Puffing-Zyklen im Bereich von 30 Sekunden bis 90 Sekunden stattfinden können.

Dies erfordert nun erhebliche Anforderungen an die Geschwindigkeit und an die Gleichmäßigkeit der Vorwärmung des Gutes in der vorgeschalteten Heizkammer.

Eine indirekte Beaufschlagung des Gutes in der Heizkammer mit Wärme, beispielsweise dadurch, daß die Kammerwand der sich drehenden Heizkammer von außen über Gasflammen erwärmt wird und diese Wärme von der erwärmten Wand auf das an der Innenseite sich entlangbewegende Gut übertragen wird, benötigt einen gewissen Zeitraum und ist mit hohen Wärmeverlusten verbunden. Auch die Gleichmäßigkeit der Erwärmung des Gutes ist nicht immer sichergestellt, da sich umwälzende Gutmassen relativ unkontrolliert durchgemischt werden, so daß es durchaus vorkommen kann, daß äußere Bereiche, die längere Zeit in direktem Kontakt mit der heißen Heizkammerwand stehen, stärker erwärmt werden als mehr im Kern der umgewälzten Gutmasse befindliche Gutteile.

Ein möglichst gleichmäßig erwärmtes Gut ist aber eine Voraussetzung für ein gleichmäßig gutes Puffing-Produkt, denn in der kurzen Aufheizzeit in dem Puffing-Reaktor steht keine ausreichende Zeit zur Verfügung, um Temperaturunterschiede in dem Batch an Gut vollständig auszugleichen.

Es ist daher Aufgabe der vorliegenden Erfindung, hier Abhilfe zu schaffen und eine Vorrichtung und ein Verfahren der eingangs genannten Art dahingehend zu verbessern, daß eine rasche gleichmäßige und effiziente Vorwärmung des Gutes erzielt werden kann.

Erfindungsgemäß wird die Aufgabe durch eine Vorrichtung dadurch gelöst, daß die Heizvorrichtung ein anströmbodenloses Strahlwirbelbett aufweist, in dem ein Batch des zu erwärmenden Gutes in einem zum Puffing-Prozeß getaktet und batchweise ablaufenden Vorwärmvorgang mit einem wärmeführenden gasförmigen Medium beaufschlagbar ist.

Bei einem Verfahren wird die Aufgabe dadurch gelöst, daß ein Batch des Gutes in einem anströmbodenlosen Strahlwirbelbett in einem zum Puffing-Prozeß getaktet und batchweise ablaufenden Vorwärmvorgang durch ein wärmeführendes Medium verwirbelt wird und dabei gleichmäßig erwärmt wird.

Unter dem Begriff "anströmbodenloses Strahlwirbelbett" wird eine Konstruktion verstanden, bei der ein Batch des zu erwärmenden Gutes durch einen kräftigen Strahl des wärmeführenden Mediums zu einem strahlförmigen Wirbelbett aufgeblasen wird, in dem keine mechanischen Hindernisse vorhanden sind, so daß sich die Strahlform frei entfalten kann. Ein Boden ist nicht vorhanden, da dessen Querschnitt als Einblasöffnung dient.

Das Vorsehen eines Strahlwirbelbettes erlaubt einen unmittelbaren und intensiven Kontakt des wärmeführenden Mediums mit dem Gut, so daß eine effiziente Wärmeübertragung ohne Wärmeverluste, also ohne das Erwärmen von wärmeübertragenden Wänden, in kürzester Zeit erfolgen kann.

Dadurch, daß das Gut durch das wärmeführende gasförmige Medium in einem Strahlwirbelbett verwirbelt wird, befinden sich die einzelnen Gutteilchen relativ weit von einander entfernt, so daß das gasförmige wärmeführende Medium jedes einzelne Gutteilchen vollständig umströmen kann, was wieder der effizienten und insbesondere der raschen und gleichmäßigen Erwärmung zuträglich ist.

Dies wird noch weiter gefördert durch den Verwirbelungsvorgang, d.h. durch die hohe Relativgeschwindigkeit zwischen wärmeführendem gasförmigem Medium und dem verwirbelten Gut wird eine rasche und gleichmäßige Erwärmung sichergestellt.

In dem Strahlwirbelbett herrschen gleichmäßige und gleichbleibende Bedingungen, so daß ein gesamtes Batch, also eine gesamte Füllung eines Puffing-Reaktors, beispielsweise 20 kg, gleichmäßig und rasch erwärmt werden kann.

Durch diesen raschen und hoch effektiven Wärmeübergang ist es möglich, innerhalb der kurzen möglichen Puffing-Taktzeiten von etwa 90 Sekunden das Gut dem Strahlwirbelbett zuzuführen, das Wirbelbett aufzubauen, die Wärme zu übertragen und das erwärmte Gut dem Puffing-Reaktor zuzuführen, so daß beispielsweise der eigentliche Wärmeübertragungsvorgang im Wirbelbett nur ca. 80 Sekunden Zeit in Anspruch nimmt.

Durch die in Abstimmung mit dem Puffing-Reaktor getaktete Vorgehensweise sind keine Stand- oder Wartezeiten des erwärmten Gutes in Zwischenbehältnissen zwischen der Heizkammer und dem Puffing-Reaktor notwendig. Dies hat nun den erheblichen Vorteil, daß dadurch ausgeschlossen werden kann, daß unkontrollierte, durch Wärme initiierte Reaktionen in dem erwärmten Gut ablaufen können. Eine solche Reaktion ist beispielsweise die sogenannte "Maillard"-Reaktion. Diese exotherme Reaktion, die durch Wärme initiiert wird, führt zu einem unerwünschten Bräunen des Gutes. Ist die "Maillard"-Reaktion einmal initiiert, schreitet diese sehr rasch aufgrund des exothermen Ablaufes fort, und es können unerwünschte Kettenreaktionen folgen. Dies wird nun dadurch verhindert, daß eine langwierige Zwischenlagerung unterbleibt und das vorgewärmte Batch im Taktzyklus sofort dem Puffing-Reaktor zugeführt wird.

Somit wird die Aufgabe vollkommen gelöst.

In einer weiteren Ausgestaltung der Erfindung ist das Strahlwirbelbett als stehendes, sich nach oben konisch erweiterndes Rohr ausgebildet.

Diese Maßnahme hat zum einen den Vorteil, daß das Strahlwirbelbett aus konstruktiv sehr einfachen Mitteln aufgebaut ist und die Länge und Konizität eine konstruktiv einfache Anpassung an unterschiedliche Guteigenschaften und unterschiedliche Batch-Größen erlauben, und außerdem eine optimale Entwicklung des strahlförmigen Wirbelbettes ermöglichen. Durch die Aufweitung entsteht eine definierte Zone, in der sich die Geschwindigkeit des eingeblasenen und sich erweiternden Strahles so weit verlangsamt hat, daß sich das Gut vom gasförmigen Medium trennt und im Wirbelbett zurückbleibt.

In einer weiteren Ausgestaltung der Erfindung ist das Strahlwirbelbett in einem Kreislauf angeordnet, in dem das wärmeführende Medium umgewälzt wird.

Diese Maßnahme hat nun den erheblichen verfahrenstechnischen Vorteil, daß durch die Kreislaufführung eine effiziente und energiesparende Führung und Übertragung der Wärme möglich ist.

In einer weiteren Ausgestaltung der Erfindung ist im Kreislauf ein Wärmetauscher und ein Umwälzgebläse angeordnet.

Diese Maßnahme hat nun den Vorteil, daß über den Wärmeaustauscher dem Kreislauf bzw. dem darin umgewälzten Medium die notwendige Wärme unmittelbar zugeführt werden kann, so daß auch hier wieder sehr wärmeeffizient gearbeitet werden kann. Das Umwälzgebläse ermöglicht nun eine flexible Anpassung an das Gut, d.h. es kann individuell auf die Art, die Größe und die Menge des zu verwirbelnden Gutes eingestellt werden, um jeweils in kürzester Zeit die effizienteste Wärmeübertragung zu erzielen.

In einer weiteren Ausgestaltung der Erfindung sind druck- und saugseitig des Umwälzgebläses Lüftungsventile angeordnet.

Diese Maßnahme hat den Vorteil, daß dem gasförmigen Medium über ein Entlüftungsventil, das druckseitig vorgesehen ist, Teilmengen entzogen werden können, um Feuchtigkeit aus dem Kreislauf zu entfernen. Über ein Belüftungsventil, das saugseitig vorgesehen ist, kann dann frisches gasförmiges Medium dem Kreislauf zugespeist werden.

In einer weiteren Ausgestaltung der Erfindung ist im Kreislauf ein Zyklonabscheider oder ein Filterabscheider angeordnet.

Diese Maßnahme hat den Vorteil, daß in dem Kreislauf das zu erwärmende Gut von kleineren Staub- oder sonstigen Partikeln befreit werden kann, die nämlich von dem Medium aus dem Strahlwirbelbett mitgerissen werden und im Zyklonabscheider oder im Filterabscheider aus dem Kreislauf entfernt werden. Dies führt später zu einem hervorragenden staubfreien Endprodukt.

In einer weiteren Ausgestaltung der Erfindung ist der Puffing-Reaktor über einen Zweigkreislauf mit dem Kreislauf verbindbar, so daß das erwärmte Gut direkt vom Kreislauf über den Zweigkreislauf dem Puffing-Reaktor zuführbar ist.

Diese Maßnahme hat nun den erheblichen Vorteil, daß durch Zuschalten des Zweigkreislaufes durch das wärmeführende Medium das vorgewärmte Gut direkt dem Puffing-Reaktor zugeführt wird. Dadurch, daß das Produkt dann auch beim Überführen noch mit dem wärmeführenden Medium in Verbindung steht, kann es sich nicht abkühlen, sondern wird mit der exakt gewünschten Temperatur dem Puffing-Reaktor zugeführt. Dies ist konstruktiv auch äußerst einfach, es müssen dann nicht separate Sammel- und Transportvorrichtungen für das Überbringen des warmen Gutes von der Heizkammer in den Puffing-Reaktor vorgesehen werden.

In einer weiteren Ausgestaltung zweigt vor dem Strahlwirbelbett der Zweigkreislauf ab, und am Einlaß des Strahlwirbelbettes ist ein Steuerventil angeordnet, das in einer Stellung eine Führung des gasförmigen Mediums im Kreislauf steuert, und in einer zweiten Stellung den Einlaß des Mediums in das Strahlwirbelbett sperrt, die dann mit dem Zweigkreislauf verbunden ist.

Diese Maßnahme ist steuertechnisch äußerst einfach und erlaubt ein rasches Umschalten von der geschlossenen Kreislaufführung im Kreislauf zum Erwärmen des Gutes in den Transportmodus zum Überbringen des erwärmten Gutes über den Zweigkreislauf zum Puffing-Reaktor. Durch Abschalten des Strahlwirbelbettes bricht das Wirbelbett schlagartig zusammen, und das Gut kann gesammelt zum Puffing-Reaktor geführt werden.

In einer weiteren Ausgestaltung der Erfindung ist der Einlaß des Strahlwirbelbettes über eine Fall-Leitung mit einer unterhalb des Einlasses gelegenen Leitung des Zweigkreislaufs verbunden.

Diese Maßnahme hat nun den erheblichen verfahrens- und steuerungstechnischen Vorteil, daß die Schwerkraft zu Hilfe genommen wird, um das Gut in den Zweigkreislauf zu überführen. Wird nämlich über das Steuerventil das gasführende Medium nicht mehr in das Strahlwirbelbett eingeführt, bricht das Wirbelbett zusammen und fällt entsprechend den Gesetzen der Schwerkraft in Richtung Boden des Strahlwirbelbettes. Durch das Vorsehen der Fall-Leitung kann nun dieses Gut direkt in die Leitung des Zweigkreislaufes eingelassen werden, und das Gut wird dann durch das zwischenzeitlich in den Zweigkreislauf umgeschaltete gasführende Medium zum Puffing-Reaktor überführt. Dies ist steuerungstechnisch und konstruktiv sehr einfach, effektiv und mit geringem Wärmeverlust in kürzester Zeit durchzuführen.

In einer weiteren Ausgestaltung der Erfindung ist im Zweigkreislauf unmittelbar vor dem Beschickungseinlaß des Puffing-Reaktors ein Zyklonabscheider angeordnet, in den das erwärmte Gut gefördert wird.

Diese Maßnahme hat nun den erheblichen Vorteil, daß das Gut feinst verteilt und noch von dem wärmeführenden Medium umströmt in den Zyklonabscheider überbracht wird und sich dann dort von dem Medium trennt.

Das bedeutet, bis unmittelbar vor Überführen in den Puffing-Reaktor steht das Gut noch mit dem wärmeführenden Medium in intensivem Wärmeaustausch, so daß sogar noch der Transportweg zum Puffing-Reaktor als Wärmeaustausch zumindest zum Konstanthalten des erreichten Wärmezustandes genützt werden kann.

Bei den eingangs genannten Vorrichtungen, die mit einem relativ langsamen Mengendurchsatz, allerdings mit hohen Mengen und hohen Wärmemengen, beispielsweise durch die Gasflammen arbeiten, können durch lokale Überhitzungen an einzelnen Gutteilchen "Maillard"-Reaktionen ausgelöst werden. Durch die Zwischenlagerung zwischen der Heizkammer und dem Einführen in den Puffing-Reaktor steht dann ausreichend Zeit zur Verfügung, daß solche Reaktionen unkontrolliert fortschreiten können. Ganz abgesehen davon können in diesen Zwischenlagerungen zwischen der Heizvorrichtung und dem Puffing-Reaktor auch erhebliche Temperaturgradienten auftreten, da ein Teilchen, das zu Beginn des Auffüllvorgangs auf den Boden des Zwischenlagers, der meist als Trichter ausgebildet ist, fällt, wesentlich länger darin verbleibt als ein nach und nach auf diesem aufgehäufeltes Gutteilchen.

Dies wird nun durch die vorliegende Erfindung ausgeschlossen, da eine solche für jedes Teilchen unterschiedlich lange Zwischenlagerung wegfällt und das Gut ohnehin viel gleichmäßiger erwärmt ist, so daß, auch wenn aus Sicherheits- und Betriebskontinuitätsgründen dennoch ein Zwischenspeicher gewünscht ist, darin keine unkontrollierten und unerwünschten Reaktionen ablaufen können, oder zumindest entscheidend gehemmt werden.

In einer weiteren Ausgestaltung der Erfindung mündet eine Zuführvorrichtung zum Zuführen des noch nicht erwärmten Gutes im Kreislauf.

Diese Maßnahme hat den Vorteil, daß an einer günstigen Stelle das zu erwärmende Gut in den Kreislauf eingebracht werden kann, z.B. im Bodenbereich des Strahlwirbelbettes, von dem es dann, sofort nach Schalten des Kreislaufs, in die Wirbelzone des Strahlwirbelbettes hinein verwirbelt wird.

In einer weiteren Ausgestaltung der Erfindung ist der Puffing-Reaktor als stehender Reaktor ausgebildet, und das Strahlwirbelbett ist über einem oberen Einlaßende des Puffing-Reaktors angeordnet.

Diese Maßnahme hat den Vorteil, daß das vorerwärmte Gut direkt aus dem Strahlwirbelbett in den Puffing-Reaktor überbracht werden kann, beispielsweise indem die Luftführung durch das Strahlwirbelbett kurzzeitig unterbrochen wird.

Dadurch kann nicht nur das Gut ohne die Gefahr von Abkühlungen oder sonstigen Veränderungen kurzfristig in den Puffing-Reaktor überführt werden, beispielsweise unter Zuhilfenahme der Schwerkraft. Dies hat auch zur Folge, daß in den Taktzyklen in dem Strahlwirbelbett bis nahezu an das zeitliche Ende eines Zeitzyklus erwärmt werden kann, und unmittelbar nachdem der Puffing-Reaktor entleert und wieder verschlossen ist, das erwärmte Produkt in den Puffing-Reaktor überbracht werden kann.

Es versteht sich, daß die vorstehend genannten und die nachstehend noch zu erläuternden Merkmale nicht nur in den genannten Kombinationen, sondern auch in anderen Kombinationen oder in Alleinstellung einsetzbar sind, ohne den Rahmen der vorliegenden Erfindung zu verlassen.

Die Erfindung wird nachfolgend anhand eines ausgewählten Ausführungsbeispiels im Zusammenhang mit den beiliegenden Zeichnungen näher beschrieben und erläutert. Es zeigen:
- Fig. 1: stark schematisiert eine Gesamtansicht einer Vorrichtung in einem Betriebszustand, in dem der Kreislauf zum Erwärmen des Gutes in dem Strahlwirbelbett geschlossen ist,
- Fig. 2: eine der Fig. 1 entsprechende Ansicht, bei der der Zweigkreislauf angeschlossen ist, um das Gut aus dem Kreislauf zum Puffing-Reaktor zu überbringen,
- Fig. 3: eine stark vergrößerte ausschnittsweise Darstellung der Vorrichtung im Bereich des Bodens des Strahlwirbelbettes im Schaltungszustand von Fig. 1, und
- Fig. 4: einen vergleichbaren Ausschnitt entsprechend dem in Fig. 2 gezeigten Schaltungszustand zum Überführen des vorgewärmten Gutes.

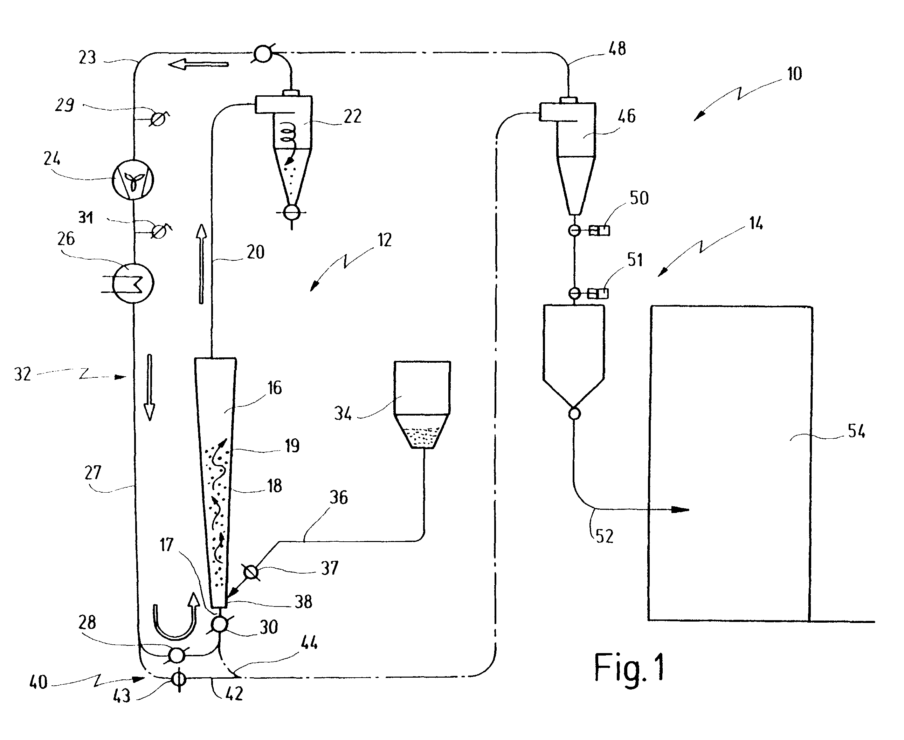

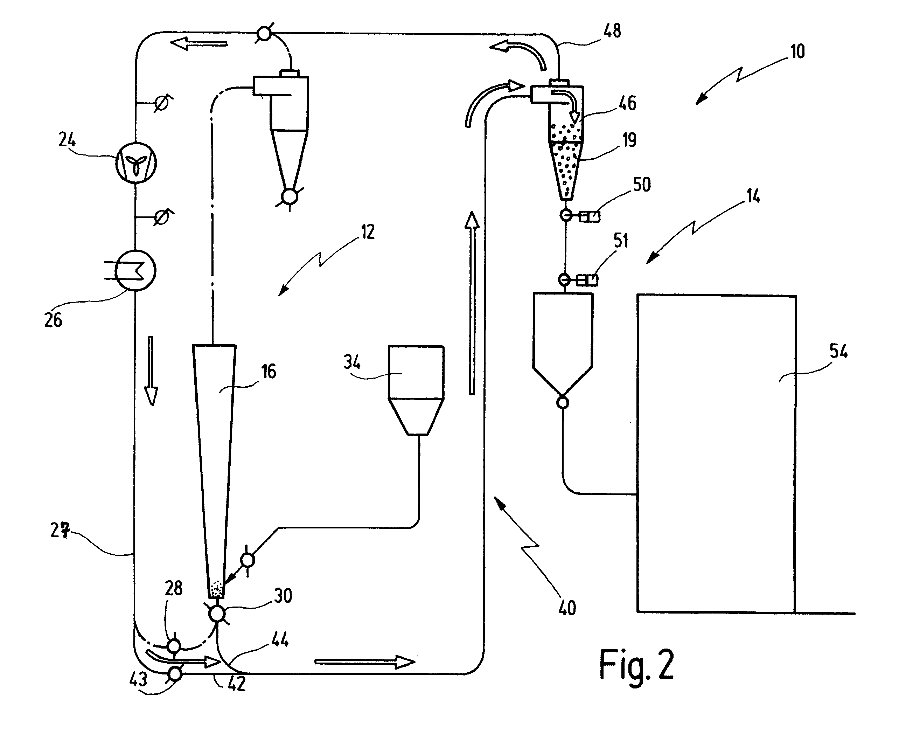

Eine in den Figuren 1 und 2 gezeigte Vorrichtung zum Puffen von körnigem Gut, nämlich zum Puffen von Getreide, ist in ihrer Gesamtheit mit der Bezugsziffer 10 bezeichnet.

Die Vorrichtung 10 weist eine Heizvorrichtung 12 und getrennt davon einen Puffing-Reaktor 14 auf.

Die Heizvorrichtung 12 weist ein Strahlwirbelbett 16 auf, das in Form eines stehenden, sich nach oben konisch erweiternden Rohres 18 ausgebildet ist.

Vom oberen Ende des Strahlwirbelbettes 16 führt eine Leitung 20 zu einem Zyklonabscheider 22.

Vom oberen Ende des Zyklonabscheiders 22 führt eine Leitung 23 zu einem Umwälzgebläse 24, an den sich ein Wärmetauscher 26 anschließt.

Saugseitig des Umwälzgebläses 24 ist ein Belüftungsventil 29 zum Einbringen von Frischluft angeordnet. Druckseitig des Umwälzgebläses 24 ist ein Entlüftungsventil 31 zum Abführen von feuchtigkeitsbelasteter Luft angeordnet.

Vom Wärmetauscher 26 führt eine Leitung 27 zum Einlaß 17 des Strahlwirbelbettes 16. Am Einlaß 17 ist eine Steuerklappe 30 angeordnet, unmittelbar vor der Steuerklappe 30 ist in der Leitung 27 eine Klappe 28 angeordnet.

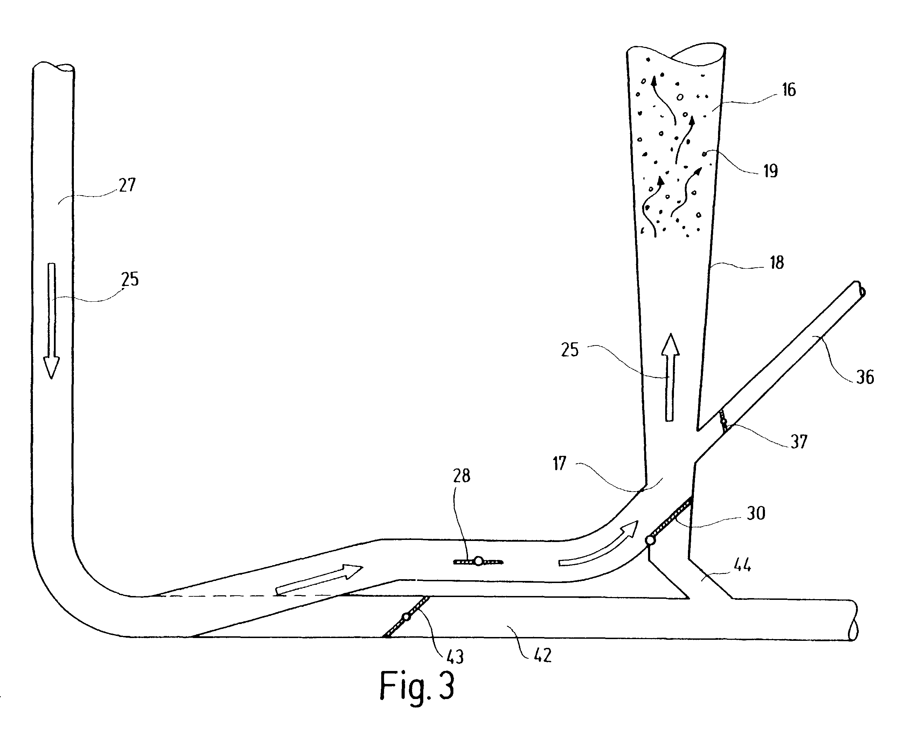

Die nähere Ausgestaltung und Arbeitsweise wird später in Zusammenhang mit Fig. 3 beschrieben.

Der leitungsmäßig in sich geschlossene Zusammenbau von Strahlwirbelbett 16, Zyklonabscheider 22, Umwälzgebläse 24 und Wärmetauscher 26 bilden einen Kreislauf 32, wie das in Fig. 1 durch die Pfeile dargestellt ist.

Unmittelbar vor der Klappe 28 zweigt ein Zweigkreislauf 40 ab.

In einer Leitung 42 des Zweigkreislaufs 40 ist eine Klappe 43 angeordnet, nach der eine Fall-Leitung 44 eine Verbindung zwischen der Steuerklappe 30 und der Leitung 42 des Zweigkreislaufes 40 bildet. Die Leitung 42 führt zu einem Zyklonabscheider 46 unmittelbar über dem Puffing-Reaktor 14. Der Zyklonabscheider 46 ist über Dosierschieber 50 und 51 mit dem Einlaß- bzw. Zuführende des Puffing-Reaktors 14 verbunden.

Am Auslaß ist der Puffing-Reaktor 14 über eine Leitung 52 mit einer Expansionskammer 54 verbunden.

Eine Zuführvorrichtung 34 dient zu, um das zu erwärmende Gut 19 dem Kreislauf 32 zuzuführen, dazu mündet eine Zuführleitung 36 im Bodenbereich 38 des Strahlwirbelbettes 16. Eine Klappe 37 erlaubt ein Öffnen und Schließen der Zuführleitung 36.

Die Zuführleitung 36 kann auch unmittelbar mit dem Einlaß über ein Mehrwegventil verbunden sein, so daß jeweils die Menge eines Batch eingesaugt werden kann. Die Zuführleitung 36 kann auch direkt in die Leitung 27 münden.

Die Vorrichtung 10 arbeitet wie folgt:

Das Umwälzgebläse 24 wälzt das im Kreislauf 32 aufgenommene gasförmige Medium 25, im dargestellten Ausführungsbeispiel heiße Luft, mit etwa 160 °C um. Über den Wärmeaustauscher 26 wird die Luft mit Wärme beaufschlagt. Die heiße Luft 25 wird über die Leitung 27 (siehe auch insbesondere die vergrößerte Darstellung von Fig. 3) zum bodenseitigen Einlaß 17 des Strahlwirbelbettes 16 geführt, schießt dort als ein Strahl über den gesamten Einlaßquerschnitt ein und verwirbelt darin das zu erwärmende körnige Gut 19, wie das durch die Strömungspfeile angezeigt ist. Es entwickelt sich ein freier strahlförmiger Gasstrom entsprechend der Konizität des Rohres 18.

Die Klappe 43 in der Leitung 42 ist geschlossen, die Klappe 28 geöffnet, und die Steuerklappe 30 befindet sich in einer Schwenkstellung, wie sie in Fig. 3 gezeigt ist.

In dieser Stellung wird die Luft 25 im geschlossenen Kreislauf 32 umgewälzt, tritt dabei in intensiven Wärmeaustauschkontakt mit dem Gut 19 und erwärmt dieses in kürzester Zeit, d.h. in etwa 30 bis 90 Sekunden, auf die gewünschte Temperatur von ca. 120 °C.

Durch die Luft 25 aus dem Strahlwirbelbett 16 mitgerissene kleinste Staubpartikel werden im Zyklonabscheider 22 abgeschieden und können in diesem von Zeit zu Zeit entnommen werden.

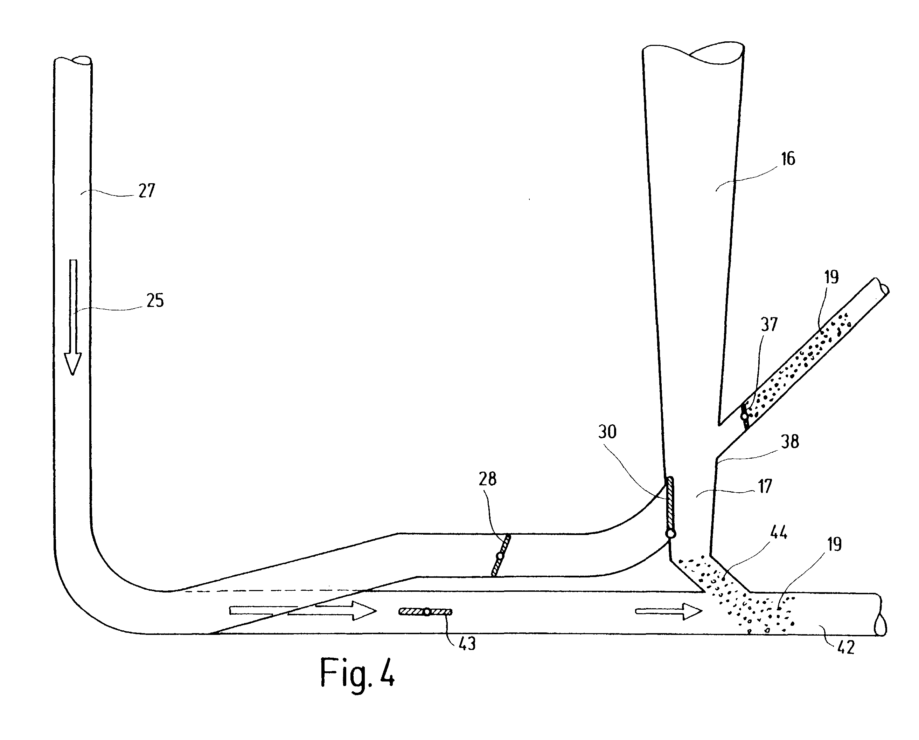

Ist das zu erwärmende Gut 19 ausreichend behandelt, wird die Steuerklappe 30 verschwenkt und in eine Stellung gebracht, wie sie in Fig. 4 dargestellt ist. Gleichzeitig wird auch die Klappe 28 in die sperrende Stellung geschwenkt und die Klappe 43 in der Leitung 42 geöffnet.

Dies hat nun zur Folge, daß das Wirbelbett in dem Strahlwirbelbett 16 schlagartig zusammenfällt und das Gut 19 der Schwerkraft folgend Richtung Boden bzw. Einlaß 17 des Strahlwirbelbettes 16 abfällt. Dieses abfallende Gut 19 wird über die Fall-Leitung 44 in die Leitung 42 überführt. Das in die Leitung 42 überführte erwärmte Gut 19 wird nun durch das nach wie vor umgewälzte heiße Medium 25 über den Zweigkreislauf 40 zum Zyklonabscheider 46 transportiert, wie das in Fig. 2 dargestellt ist. Im Zyklonabscheider 46 wird das Gut 19 vom Fördermedium 25 getrennt. Das vom Gut 19 getrennte Medium 25 wird über eine Leitung 48 wieder zur Saugseite des Umwälzgebläses 24 geführt.

Die in Fig. 2 mit durchgezogenen Linien gezeigte Führung stellt somit den Zweigkreislauf 40 dar, der auch einen Teil des Kreislaufs 32 durchläuft, nämlich das Umwälzgebläse 24 und den Wärmetauscher 26. Dadurch ist es möglich, unabhängig davon, ob im Kreislaufbetrieb zum Erwärmen des Gutes oder zum Überführen des erwärmten Gutes ein und dieselben Förder- und Wärmeaustauschvorrichtungen eingesetzt werden können, was besonders effizient ist.

Aus der Darstellung von Fig. 4 ist nun ersichtlich, daß, wenn das Gut 19 an der Steuerklappe 30 vorbei gefallen und über die Fall-Leitung 44 in die Leitung 42 abgeführt ist, die Steuerklappe 30 wieder in die in Fig. 3 gezeigte Stellung gebracht werden kann. Durch Öffnen der Klappe 37 kann nunmehr ein neues Batch an zu erwärmendem Gut 19 über die Leitung 36 aus der Zuführungsvorrichtung 34 zugeführt werden, die Klappe 28 verhindert dabei, daß das Gut 19 in den Zweigkreislauf 40 eintritt.

Nach Schließen der Klappe 43 und Öffnen der Klappe 28 wird dann das Gut 19 in das Strahlwirbelbett 16 hineingedrückt und dort verwirbelt.

Die Vorgänge Erwärmen des zu erwärmenden Guts 19 in dem Strahlwirbelbett 16, Überführen des erwärmten Gutes 19 zum Puffing-Reaktor 14 und Nachfüllen von noch nicht erwärmtem Gut 19 in das Strahlwirbelbett 16 können in kurzen Zeitabständen durch mechanisch einfache und somit betriebssichere Mittel bewirkt werden.

Über die Schieber 50 und 51 wird das Gut 19 batchweise in den Puffing-Reaktor 14 überführt, und wird dort dann mit dem Dampf und Druck beaufschlagt, um den Puffing-Vorgang durchzuführen. Nach schlagartigem Öffnen des Puffing-Reaktors 14 schießt das Gut 19 über die Leitung 52 (siehe Fig. 1) in die Expansionskammer 54, in der es aufbläht und zum Boden absinkt und als Produkt weiterverarbeitet wird.

Bei dem dargestellten Ausführungsbeispiel ist das Strahlwirbelbett 16 neben dem als stehender Reaktor ausgebildeten Puffing-Reaktor 14 angeordnet. Dadurch liegen diese Bauteile etwa auf einer Ebene.

In einer weiteren Ausführung ist vorgesehen, das Strahlwirbelbett 16 direkt auf den Puffing-Reaktor 14 aufzusetzen. Im Entleermodus des Strahlwirbelbettes fällt dann das vorgewärmte Gut direkt in den Puffing-Reaktor 14 hinein.

## Patentansprüche

1. Vorrichtung zum Puffen von körnigem Gut (19), insbesondere von Getreide und Hülsenfrüchten, mit einer Heizvorrichtung (12) zum Vorwärmen des körnigen Gutes (19) und mit einem Puffing-Reaktor (14) zum Puffen des Gutes (19), **dadurch gekennzeichnet, daß** die Heizvorrichtung (12) ein anströmbodenloses Strahlwirbelbett (16) aufweist, in dem ein Batch des zu erwärmenden Gutes (19) in einem zum Puffing-Prozeß getaktet und batchweise ablaufenden Vorwärmvorgang mit einem wärmeführenden, gasförmigen Medium (25) beaufschlagbar ist.

2. Vorrichtung nach Anspruch 1, **dadurch gekennzeichnet, daß** das Strahlwirbelbett (16) als stehendes, sich nach oben konisch erweiterndes Rohr (18) ausgebildet ist.

3. Vorrichtung nach Anspruch 1 oder 2, **dadurch gekennzeichnet, daß** das Strahlwirbelbett (16) in einem Kreislauf (32) angeordnet ist, in dem das wärmeführende Medium (25) umgewälzt wird.

4. Vorrichtung nach Anspruch 3, **dadurch gekennzeichnet, daß** im Kreislauf (32) ein Wärmetauscher (26) und ein Umwälzgebläse (24) angeordnet sind.

5. Vorrichtung nach Anspruch 4, **dadurch gekennzeichnet, daß** druck- und saugseitig des Umwälzgebläses (24) Lüftungsventile (29, 31) angeordnet sind.

6. Vorrichtung nach Anspruch 3 oder 4, **dadurch gekennzeichnet, daß** im Kreislauf (32) ein Zyklonabscheider (22) oder ein Filterabscheider angeordnet ist.

7. Vorrichtung nach einem der Ansprüche 3 bis 6, **dadurch gekennzeichnet, daß** der Puffing-Reaktor (14) über einen Zweigkreislauf (40) mit dem Kreislauf (32) verbindbar ist, so daß das erwärmte Gut (19) direkt vom Kreislauf (32) über den Zweigkreislauf (40) dem Puffing-Reaktor (14) zuführbar ist.

8. Vorrichtung nach Anspruch 7, **dadurch gekennzeichnet, daß** vor dem Strahlwirbelbett (16) der Zweigkreislauf (40) abzweigt, und daß am Einlaß (17) des Strahlwirbelbettes (16) ein Steuerventil (30) angeordnet ist, das in einer Stellung eine Führung des gasförmigen Mediums (25) im Kreislauf (32) steuert und in einer zweiten Stellung den Einlaß des Mediums (25) in das Strahlwirbelbett (16) sperrt, das dann mit dem Zweigkreislauf (40) verbunden ist.

9. Vorrichtung nach Anspruch 8, **dadurch gekennzeichnet, daß** der Einlaß (17) des Strahlwirbelbettes (16) über eine Fall-Leitung (44) mit einer unterhalb des Einlaß (17) gelegenen Leitung (42) des Zweigkreislaufs (40) verbunden ist.

10. Vorrichtung nach einem der Ansprüche 7 bis 9, **dadurch gekennzeichnet, daß** im Zweigkreislauf (40) unmittelbar vor einem Beschickungseinlaß des Puffing-Reaktors (14) ein Zyklonabscheider (46) angeordnet ist, in den das erwärmte Gut (19) gefördert wird.

11. Vorrichtung nach einem der Ansprüche 3 bis 10, **dadurch gekennzeichnet, daß** eine Zuführ-Vorrichtung (34) zum Zuführen des noch nicht erwärmten Gutes (19) zum Kreislauf (32) in diesem mündet.

12. Vorrichtung nach einem der Ansprüche 1 bis 7, **dadurch gekennzeichnet, daß** der Puffing-Reaktor (14) als stehender Reaktor ausgebildet ist und daß das Strahlwirbelbett (16) über einem oberen Einlaßende des Puffing-Reaktors (14) angeordnet ist.

13. Verfahren zum Puffen von körnigem Gut (19), insbesondere von Getreide und Hülsenfrüchten, bei dem das Gut (19) zunächst in einer Heizvorrichtung (12) erwärmt wird und das erwärmte Gut (19) anschließend dem Puffing-Reaktor (14) zugeführt wird, **dadurch gekennzeichnet, daß** ein Batch des Gutes (19) in einem anströmbodenlosen Strahlwirbelbett (16) in einem zum Puffing-Prozeß getaktet und batchweise ablaufenden Vorwärmvorgang durch ein wärmeführendes Medium (25) in Form eines Strahles verwirbelt wird und dabei gleichmäßig erwärmt wird.

14. Verfahren nach Anspruch 13, **dadurch gekennzeichnet, daß** das Medium (25) in einem Kreislauf (32) umgewälzt wird, in dem es das Strahlwirbelbett (16) durchläuft.

15. Verfahren nach Anspruch 13 oder 14, **dadurch gekennzeichnet, daß** zum Überführen des wärmebehandelten Gutes (19) in den Puffing-Reaktor (14) die Versorgung des Strahlwirbelbettes (16) unterbrochen wird, so daß das Wirbelbett zusammenbricht und sich das Gut (19) am Bodenbereich (38) sammelt, und daß das so gesammelte Gut (19) zum Puffing-Reaktor (14) überführt wird.

16. Verfahren nach Anspruch 15, **dadurch gekennzeichnet, daß** das gesammelte Gut (19) über eine Fall-Leitung (44) in einen Zweigkreislauf (40) fällt, durch den es über das Medium (25), das im Kreislauf (32) umgewälzt wird, zum Puffing-Reaktor (14) zugeführt wird.

17. Verfahren nach einem der Ansprüche 13 bis 15, **dadurch gekennzeichnet, daß** das Strahlwirbelbett (16) über einem direkten Einlaßende des Puffing-Reaktors (14) angeordnet wird, und daß das vorgewärmte Gut (19) direkt, ohne Zwischenspeicherung, taktweise und batchweise in den Puffing-Reaktor (14) überführt wird.

## Claims

1. Device for puffing granular material (19), in particular cereals and legumes, having a heating apparatus (12) for preheating the granular material (19), and having a puffing reactor (14) for puffing the material (19), **characterized in that** the heating apparatus (12) has a jet fluidized bed (16) without a flow impact bottom within which a batch of the material (19) to be heated can be acted upon, in a preheating operation synchronized with the puffing process and proceeding batchwise, by a heat-carrying gaseous medium (25).

2. Device of Claim 1, **characterized in that** the jet fluidized bed (16) is configured as a vertical tube (18) widening conically upward.

3. Device of Claims 1 or 2, **characterized in that** the jet fluidized bed (16) is arranged in a circuit (32) in which the heat-carrying medium is circulated (25).

4. Device of Claim 3, **characterized in that** a heat exchanger (26) and a circulating fan (24) are arranged in the circuit (32).

5. Device of Claim 4, **characterized in that** vent valves (29, 31) are arranged on the delivery side and on the intake side of the circulating fan (24).

6. Device of Claims 3 or 4, **characterized in that** a cyclone separator (22) or a filter separator is arranged in the circuit (32).

7. Device of anyone of Claims 3 through 6, **characterized in that** the puffing reactor (14) can be connected to the circuit (32) via a branch circuit (40), so that the heated material (19) can be delivered directly from the circuit (32) to the puffing reactor (14) via the branch circuit (40).

8. Device of Claim 7, **characterized in that** the branch circuit (40) branches off upstream from the jet fluidized bed (16); and there is arranged at the inlet (17) of the jet fluidized bed (16) a control valve (30) that in one position controls delivery of the gaseous medium (25) into the circuit (32), and in a second position blocks the entry of medium (25) into the jet fluidized bed (16), which is then connected to the branch circuit (40).

9. Device of Claim 8, **characterized in that** the inlet (17) of the jet fluidized bed (16) is connected via a gravity line (44) to a line (42) of the branch circuit (40) running below the inlet (17).

10. Device of anyone of Claims 7 through 9, wherein a cyclone separator (46), into which the heated material (19) is conveyed, is arranged in the branch circuit (40) directly upstream from a loading inlet of the puffing reactor (14).

11. Device of anyone of Claims 3 through 10, **characterized in that** a delivery apparatus (34), for delivering the material (19) that has yet to be heated into the circuit (32), opens into the latter.

12. Device of anyone of Claims 1 through 7, **characterized in that** the puffing reactor (14) is configured as a vertical reactor; and the jet fluidized bed (16) is arranged above an upper inlet end of the puffing reactor (14).

13. Method for puffing granular material (19), in particular cereals and legumes, in which the material (19) is first heated in a heating apparatus (12), and the heated material (19) is then conveyed to the puffing reactor (14), **characterized in that** a batch of the material (19) is fluidized into the form of a jet within a jet fluidized bed (16) without a flow impact bottom, in a preheating operation synchronized with the puffing process and proceeding batchwise, using a heat-carrying medium (25), and is thereby uniformly heated.

14. Method of Claim 13, **characterized in that** the medium (25) is circulated in a circuit (32) in which it passes through the jet fluidized bed (16).

15. Method of Claims 13 or 14, **characterized in that** in order to transfer the heat-treated material (19) into the puffing reactor (14), input to the jet fluidized bed (16) is interrupted so that the fluidized bed collapses and the material (19) collects in the bottom region (38); and the material (19) thus collected is transferred to the puffing reactor (14).

16. Method of Claim 15, **characterized in that** the collected material (19) drops via a gravity line (44) into a branch circuit (40) through which it is then delivered, by way of the medium (25) that is circulating in the circuit (32), to the puffing reactor (14).

17. Method of anyone of Claims 13 through 15, **characterized in that** the jet fluidized bed (16) is arranged above a direct inlet end of the puffing reactor (14); and the preheated material (19) is transferred directly, without intermediate storage, into the puffing reactor (14) batchwise and in timed fashion.

## Revendications

1. Dispositif pour le soufflage de produits en grains (19), en particulier des céréales et des légumineuses, avec un dispositif de chauffage (12) pour préchauffer les produits en grains (19) et avec un réacteur de soufflage (14) pour le soufflage des produits (19), **caractérisé en ce que** le dispositif de chauffage (12) présente un lit fluidisé radiant à afflux sans fond (16) dans lequel un lot des produits en grains à réchauffer (19) peut, lors d'un processus de chauffage cadencé en fonction du processus de soufflage et dont le déroulement s'effectue par lots, être alimenté avec un milieu gazeux conduisant la chaleur (25).

2. Dispositif selon la revendication 1, **caractérisé en ce que** le lit fluidisé radiant (16) est conçu en tant que tuyau vertical s'élargissant de manière conique vers le haut (18).

3. Dispositif selon la revendication 1 ou 2, **caractérisé en ce que** le lit fluidisé radiant (16) est disposé dans un circuit (32) à l'intérieur duquel le milieu conduisant la chaleur (25) est brassé.

4. Dispositif selon la revendication 3, **caractérisé en ce qu'**un échangeur thermique (26) et une machine de brassage de l'air (24) sont disposés au sein du circuit (32).

5. Dispositif selon la revendication 4, **caractérisé en ce que** du côté de la pression et de l'aspiration de la machine de brassage de l'air (24), des soupapes d'aération (29, 31) sont disposées.

6. Dispositif selon la revendication 3 ou 4, **caractérisé en ce qu'**un cyclone dépoussiéreur (22) ou un filtre dépoussiéreur est aménagé au sein du circuit (32).

7. Dispositif selon l'une des revendications 3 à 6, **caractérisé en ce que** le réacteur de soufflage (14) peut être relié au circuit (32) via un circuit dérivé (40), de sorte que les produits en grains réchauffés (19) peuvent être directement acheminés depuis le circuit (32) via le circuit dérivé (40) vers le réacteur de soufflage (14).

8. Dispositif selon la revendication 7, **caractérisé en ce que** le circuit dérivé (40) bifurque devant le lit fluidisé radiant (16), et qu'à l'entrée (17) du lit fluidisé radiant (16) une vanne pilote (30) est disposée, laquelle, dans l'une des positions, pilote l'acheminement du milieu gazeux (25) au sein du circuit (32) et dans une deuxième position, empêche la pénétration du milieu (25) dans le lit fluidisé radiant (16), lequel est alors relié avec le circuit dérivé (40).

9. Dispositif selon la revendication 8, **caractérisé en ce que** l'entrée (17) du lit fluidisé radiant (16) est reliée via un tuyau de descente (44) à un tuyau (42) situé sous l'entrée (17) du circuit dérivé (40).

10. Dispositif selon l'une des revendications 7 à 9, **caractérisé en ce qu'**à l'intérieur du circuit dérivé (40), juste devant une entrée d'alimentation du réacteur de soufflage (14), un cyclone dépoussiéreur (46) est disposé, à l'intérieur duquel les produits (19) réchauffés sont acheminés.

11. Dispositif selon l'une des revendications 3 à 10, **caractérisé en ce qu'**un dispositif d'alimentation (34) pour l'acheminement des produits non encore réchauffés (19) vers le circuit (32), débouche dans ce dernier.

12. Dispositif selon l'une des revendications 1 à 7, **caractérisé en ce que** le réacteur de soufflage (14) est conçu de sorte à être un réacteur vertical, et que le lit fluidisé radiant (16) est disposé au-dessus d'une extrémité supérieure d'entrée du réacteur de soufflage (14).

13. Procédé pour le soufflage de produits en grains (19), en particulier des céréales et des légumineuses, dans lequel les produits (19) sont tout d'abord réchauffés dans un dispositif de chauffage (12), et les produits réchauffés (19) ensuite acheminés vers le réacteur de soufflage (14), **caractérisé en ce qu'**un lot de produits (19) au sein d'un lit fluidisé radiant à afflux sans fond (16), lors d'un processus de réchauffement se déroulant par lots et cadencé en fonction du processus de soufflage, est entraîné dans un tourbillon à l'aide d'un milieu conducteur de chaleur (25) sous la forme d'un jet, et réchauffé ainsi de manière régulière.

14. Procédé selon la revendication 13, **caractérisé en ce que** le milieu (25) est brassé dans un circuit (32) en traversant le lit fluidisé radiant (16).

15. Procédé selon la revendication 13 ou 14, **caractérisé en ce que**, pour l'acheminement des produits traités par la chaleur (19) au sein du réacteur de soufflage (14), l'alimentation du lit fluidisé radiant (16) est interrompue, de sorte que le lit fluidisé s'effondre et que les produits (19) se rassemblent dans la zone du fond (38), et que les produits ainsi collectés (19) sont acheminés vers le réacteur de soufflage (14).

16. Procédé selon la revendication 15, **caractérisé en ce que** les produits collectés (19) tombent via un tuyau de descente (44) dans un circuit dérivé (40), à l'aide duquel ils sont acheminés via le milieu (25) qui est brassé dans le circuit (32) vers le réacteur de soufflage (14).

17. Procédé selon l'une des revendications 13 à 15, **caractérisé en ce que** le lit fluidisé radiant (16) est disposé au-dessus d'une extrémité d'entrée directe du réacteur de soufflage (14), et que les produits préchauffés (19) sont acheminés directement, sans stockage intermédiaire, de manière cadencée et par lots au sein du réacteur de soufflage (14).
